# EUROPEAN PATENT SPECIFICATION

(11) **EP 3 159 181 B1**
(45) Date of publication and mention of the grant of the patent: **28.11.2018**
(21) Application number: 16194133.1
(22) Date of filing: 17.10.2016
(51) Int. Cl.: B60C 1/00, C08L 9/06, C08L 15/00

(54) **RUBBER COMPOSITION AND PNEUMATIC TIRE**
KAUTSCHUKZUSAMMENSETZUNG UND LUFTREIFEN
COMPOSITION DE CAOUTCHOUC ET PNEUMATIQUE

(30) Priority: 22.10.2015 US 201514920044
(43) Date of publication of application: 26.04.2017
(73) Proprietor: The Goodyear Tire & Rubber Company, Akron, Ohio 44316 (US)
(72) Inventor: POMPEI, Manuela, L-9768 Reuler (LU); ISITMAN, Nihat Ali, Hudson, OH 44236 (US)
(74) Representative: Kutsch, Bernd

(56) References cited:
- EP-A1- 2 455 232
- WO-A1-2012/069567
- WO-A1-2013/039498
- WO-A1-2013/092523
- US-A- 5 723 530

## Description

### Background of the Invention

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubbers utilized in making the tire.

In order to reduce the rolling resistance and to improve the treadwear characteristics of tires, rubbers having a high rebound have traditionally been utilized in making tire tread rubber compounds. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads.

Tires are sometimes desired with treads for promoting traction on snowy surfaces. Various rubber compositions may be proposed for tire treads. Here, the challenge is to reduce the cured stiffness of such tread rubber compositions, as indicated by having a lower storage modulus G' at -20°C, when the tread is intended to be used for low temperature winter conditions, particularly for vehicular snow driving.

It is considered that significant challenges are presented for providing such tire tread rubber compositions for maintaining both their wet traction while promoting low temperature (e.g. winter) performance.

### Summary of the Invention

To achieve such balance of tread rubber performances, there is provided a rubber composition in accordance with claim 1 and a pneumatic tire in accordance with claim 13.

Dependent claims refer to preferred embodiments of the invention.

The rubber composition contains only low Tg rubbers, such as cis 1,4-polybutadiene rubber, styrene/butadiene rubber and optionally cis 1,4 polyisoprene rubber having relatively low Tg values below -55°C to improve, or beneficially lower, the stiffness of the cured rubber composition at -20°C to improve winter performance.

To meet such challenge of providing good winter performance while maintaining wet traction for the tire tread it is desired to use a silica-rich filler reinforcement for the rubber composition containing the low Tg elastomer(s) to promote wet traction combined with promoting a reduction in its cured stiffness at low temperatures.

It is also desired to use a hydrocarbon resin to further promote wet traction while maintaining good wear characteristics of the tread rubber. Traditionally, such hydrocarbon resins are solids at ambient temperature with typical glass transition temperatures above 30°C (see e.g. Hydrocarbon Resins, Mildenberg et al., John Wiley, pub. 2008.) as opposed to process oils which are liquids at ambient temperature. However, pseudo-solid resin materials that possess a glass-to-viscous transition state at ambient temperature, can also be envisioned to be used as traction promoting resins in tread rubber formulations.

The innovation of this approach relies on the combinatory use of low Tg diene based elastomer(s) and a low Tg traction promoting resin in the tread rubber composition in place of a high Tg traction promoting resin and process oil, particularly at a relatively high resin loading to promote wet traction of the sulfur cured tread rubber which contains a high loading of silica-rich reinforcing filler and optionally contains a process oil.

In a preferred aspect of the invention, the invention is directed to a pneumatic tire having a tread comprising a vulcanizable rubber composition comprising, based on 100 parts by weight of elastomer (phr),
(A) from 40 to 90 phr of a solution polymerized styrene-butadiene rubber having a glass transition temperature (Tg) ranging from -65 °C to -55 °C;
(B) from 60 to 10 phr of polybutadiene having a cis 1,4 content greater than 95 percent and a Tg ranging from -80 °C to -110 °C; and
(C) from 45 to 65 phr of a hydrocarbon resin having a Tg ranging from -40 °C to 20°C;
(D) less than 10 phr of oil; and
(E) from 120 to 160 phr of silica;
wherein the total amount of resin and oil is less than 70 phr, and the weight ratio of silica to resin is greater than 2.

### Description of Example Embodiments of the Invention

There is disclosed to a pneumatic tire having a tread comprising a vulcanizable rubber composition comprising, based on 100 parts by weight of elastomer (phr),
(A) from 40 to 90 phr of a functionalized or non-functionalized solution polymerized styrene-butadiene rubber having a glass transition temperature (Tg) ranging from -65 °C to -55 °C;
(B) from 60 to 10 phr of polybutadiene having a cis 1,4 content greater than 95 percent and a Tg ranging from -80 °C to -110 °C; and
(C) from 45 to 65 phr of a hydrocarbon resin having a Tg ranging from -40 °C to 20°C;
(D) less than 10 phr of oil; and
(E) from 120 to 160 phr of silica;
wherein the total amount of resin and oil is less than 70 phr, and the weight ratio of silica to resin is greater than 2.

The rubber composition includes from 40 to 90 phr of a functionalized or non-functionalized styrene-butadiene rubber having a glass transition temperature (Tg) ranging from -65 °C to -55 °C. The styrene-butadiene rubber may be functionalized with various functional groups, or the styrene-butadiene rubber may be non-functionalized. In on embodiment the styrene-butadiene rubber is functionalized with an alkoxysilane group and at least one of a primary amine group and thiol group. In one embodiment, the styrene-butadiene rubber is obtained by copolymerizing styrene and butadiene, and characterized in that the styrene-butadiene rubber has a primary amino group and/or thiol group and an alkoxysilyl group which are bonded to the polymer chain. In one embodiment, the alkoxysilyl group is an ethoxysilyl group. In one embodiment, the styrene-butadiene rubber is not functionalized.

The primary amino group and/or thiol group may be bonded to any of a polymerization initiating terminal, a polymerization terminating terminal, a main chain of the styrene-butadiene rubber and a side chain, as long as it is bonded to the styrene-butadiene rubber chain. However, the primary amino group and/or thiol group is preferably introduced to the polymerization initiating terminal or the polymerization terminating terminal, in that the disappearance of energy at a polymer terminal is inhibited to improve hysteresis loss characteristics.

Further, the content of the alkoxysilyl group bonded to the polymer chain of the (co)polymer rubber is preferably from 0.5 to 200 mmol/kg of styrene-butadiene rubber. The content is more preferably from 1 to 100 mmol/kg of styrene-butadiene rubber, and particularly preferably from 2 to 50 mmol/kg of styrene-butadiene rubber.

The alkoxysilyl group may be bonded to any of the polymerization initiating terminal, the polymerization terminating terminal, the main chain of the (co)polymer and the side chain, as long as it is bonded to the (co)polymer chain. However, the alkoxysilyl group is preferably introduced to the polymerization initiating terminal or the polymerization terminating terminal, in that the disappearance of energy is inhibited from the (co)polymer terminal to be able to improve hysteresis loss characteristics.

The functionalized or non-functionalized styrene-butadiene rubber can be produced by polymerizing styrene and butadiene in a hydrocarbon solvent by anionic polymerization using an organic alkali metal and/or an organic alkali earth metal as an initiator, adding a terminating agent compound having a primary amino group protected with a protective group and/or a thiol group protected with a protecting group and an alkoxysilyl group to react it with a living polymer chain terminal at the time when the polymerization has substantially completed, and then conducting deblocking, for example, by hydrolysis or other appropriate procedure. In one embodiment, the styrene-butadiene rubber can be produced as disclosed in US-B-7,342,070. In another embodiment, the styrene-butadiene rubber can be produced as disclosed in WO-A-2007/047943.

In one embodiment, and as taught in US-7,342,070, the styrene-butadiene rubber is of the formula (I) or (II) 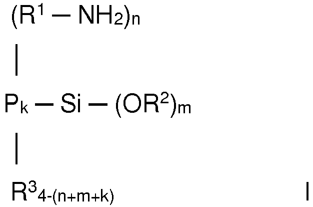 wherein P is a (co)polymer chain of a conjugated diolefin or a conjugated diolefin and an aromatic vinyl compound, R¹ is an alkylene group having 1 to 12 carbon atoms, R² and R³ are each independently an alkyl group having 1 to 20 carbon atoms, an allyl group or an aryl group, n is an integer of 1 or 2, m is an integer of 1 or 2, and k is an integer of 1 or 2, with the proviso that n+m+k is an integer of 3 or 4, 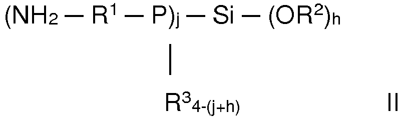 wherein P, R¹, R² and R³ have the same definitions as give for the above-mentioned formula I, j is an integer of 1 to 3, and h is an integer of 1 to 3, with the provision that j+h is an integer of 2 to 4.

The terminating agent compound having a protected primary amino group and an alkoxysilyl group may be any of various compounds as are known in the art. In one embodiment, the compound having a protected primary amino group and an alkoxysilyl group may include, for example, N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)-aminoethyltriethoxysilne, N,N-bis(trimethylsilyl)aminoethylmethyldimethoxysilane, N,N-bis(trimethylsilyl)aminoethylmethyldiethoxysilane, etc., and preferred are 1-trimethylsilyl-2,2-dimethoxy-1-aza-2-silacyclopentane, N,N-bis(trimethylsilyl) aminopropylmethyldimethoxysilane and N,N-bis(trimethylsilyl)aminopropylmethyldiethoxysilane. In one embodiment, the compound having a protected primary amino group and an alkoxysilyl group is N,N-bis(trimethylsilyl)aminopropyltriethoxysilane.

In one embodiment, the compound having a protected primary amino group and an alkoxysilyl group may be any compound of formula III

RN-(CH₂)_{X}Si(OR')₃, III

wherein R in combination with the nitrogen (N) atom is a protected amine group which upon appropriate post-treatment yields a primary amine, R' represents a group having 1 to 18 carbon atoms selected from an alkyl, a cycloalkyl, an allyl, or an aryl; and X is an integer from 1 to 20. In one embodiment, at least one R' group is an ethyl radical. By appropriate post-treatment to yield a primary amine, it is meant that subsequent to reaction of the living polymer with the compound having a protected primary amino group and an alkoxysilyl group, the protecting groups are removed. For example, in the case of bis(trialkylsilyl) protecting group as in N,N-bis(trimethylsilyl)aminopropyltriethoxysilane, hydrolysis is used to remove the trialkylsilyl groups and leave the primary amine.

In one embodiment, the rubber composition includes from 50 to 90 phr of styrene-butadiene rubber functionalized with an alkoxysilane group and a primary amine group or thiol group.

Suitable styrene-butadiene rubbers functionalized with an alkoxysilane group and a primary amine group are available commercially, such as HPR 340 from Japan Synthetic Rubber (JSR).

In one embodiment, the solution polymerized styrene-butadiene rubber is as disclosed in WO-A-2007/047943 and is functionalized with an alkoxysilane group and a thiol, and comprises the reaction product of a living anionic polymer and a silane-sulfide modifier represented by the formula VII

(R⁴O)ₓR⁴_{y}Si-R⁵-S-SiR⁴₃ VII

wherein Si is silicon; S is sulfur; O is oxygen; x is an integer selected from 1, 2 and 3;y is an integer selected from 0, 1, and 2; x+y=3;R⁴ is the same or different and is (C₁-C₁₆) alkyl; and R' is aryl, and alkyl aryl, or (C₁-C₁₆) alkyl. In one embodiment, R⁵ is a (C₁-C₁₆) alkyl. In one embodiment, each R⁴ group is the same or different, and each is independently a C₁-C₅ alkyl, and R⁵ is C₁-C₅ alkyl.

The solution polymerized styrene-butadiene rubber has a glass transition temperature in a range from -65 °C to -55 °C. A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. A Tg is determined as a peak midpoint by a differential scanning calorimeter (DSC) at a temperature rate of increase of 10ºC per minute, according to ASTM D7426 or equivalent.

Suitable styrene-butadiene rubbers functionalized with an alkoxysilane group and a thiol group are available commercially, such as Sprintan SLR 3402 from Trinseo.

Another component of the rubber composition is from 60 to 10 phr of polybutadiene having a cis 1,4 content greater than 95 percent and a Tg ranging from -80 °C to -110 °C. Suitable polybutadiene rubbers may be prepared, for example, by organic solution polymerization of 1,3-butadiene. The BR may be conveniently characterized, for example, by having at least a 90 percent cis 1,4-content and a glass transition temperature Tg in a range of from -95ºC to -110ºC. Suitable polybutadiene rubbers are available commercially, such as Budene® 1229 from Goodyear and the like, having a Tg of -108 °C and cis 1,4, content of 96%.

The rubber composition may include up to 10 phr of a processing oil. In one embodiment, the amount of processing oil ranges from 1 to 5 phr. In one embodiment, the rubber composition is devoid of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, and low PCA oils, such as MES, TDAE, and heavy naphthenic oils, and vegetable oils such as sunflower, soybean, and safflower oils.

In one embodiment, the rubber composition includes a low PCA oil. Suitable low PCA oils include but are not limited to mild extraction solvates (MES), treated distillate aromatic extracts (TDAE), and heavy naphthenic oils as are known in the art; see for example US-A-5,504,135; US-B-6,103,808; US-B-6,399,697; US-B-6,410,816; US-B-6,248,929; US-B-6,146,520; US-A-2001/00023307; US-A-2002/0000280; US-A-2002/0045697; US-A-2001/0007049; EP-A-0 839 891; JP-A-2002-097369; and ES-A-2122917. Generally, suitable low PCA oils include those having a glass transition temperature Tg in a range of from -40ºC to -80ºC. MES oils generally have a Tg in a range of from -57ºC to -63ºC. TDAE oils generally have a Tg in a range of from -44ºC to -50ºC. Heavy naphthenic oils generally have a Tg in a range of from -42ºC to -48ºC. A suitable measurement for Tg of TDAE oils is DSC according to ASTM E1356, or equivalent.

Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

Suitable TDAE oils are available as Tudalen SX500 from Klaus Dahleke KG, VivaTec 400 and VivaTec 500 from H&R Group, Enerthene 1849 from BP, and Extensoil 1996 from Repsol. The oils may be available as the oil alone or along with an elastomer in the form of an extended elastomer.

Suitable vegetable oils include, for example, soybean oil, sunflower oil and canola oil which are in the form of esters containing a certain degree of unsaturation.

The rubber composition includes from 45 to 65 phr of a hydrocarbon resin having a glass transition temperature between -40 °C and 20 °C. A suitable measurement of Tg for resins is DSC according to ASTM D6604 or equivalent. The hydrocarbon resin has a softening point between 0 °C and 70 °C as determined by ASTM E28 which might sometimes be referred to as a ring and ball softening point.

The resin is selected from the group consisting of coumarone-indene resins, petroleum resins, terpene polymers, styrene-alphamethylstyrene resins, terpene phenol resins, rosin derived resins and copolymers and/or mixtures thereof.

In one embodiment, the resin is a coumarone-indene resin containing coumarone and indene as the monomer components making up the resin skeleton (main chain). Monomer ingredients other than coumarone and indene which may be incorporated into the skeleton are, for example, methyl coumarone, styrene, alphamethylstyrene, methylindene, vinyltoluene, dicyclopentadiene, cycopentadiene, and diolefins such as isoprene and piperlyene. Suitable coumarone-indene resin is available commercially as Novares C30 from Rütgers Novares GmbH.

Suitable petroleum resins include both aromatic and nonaromatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include any C5 species such as cyclopentadiene, dicyclopentadiene, diolefins such as isoprene and piperylene, and any C9 species such as vinyltoluene and alphamethylstyrene. Such resins are made by any mixture formed from C5 and C9 species mentioned above.

In one embodiment, said resin may be a terpene resin comprising polymers of at least one of limonene, alpha pinene and beta pinene.

The styrene/alphamethylstyrene resin is considered herein to be a relatively short chain copolymer of styrene and alphamethylstyrene with a styrene/alphamethylstyrene molar ratio in a range of from 0.05 to 1.50. In one aspect, such a resin can be suitably prepared, for example, by cationic copolymerization of styrene and alphamethylstyrene in a hydrocarbon solvent. Thus, the contemplated styrene/alphamethylstyrene resin can be characterized, for example, by its chemical structure, namely, its styrene and alphamethylstyrene contents and by its glass transition temperature, molecular weight and molecular weight distribution.

Terpene-phenol resins may be used. Terpene-phenol resins may be derived by copolymerization of phenolic monomers with terpenes such as limonenes and pinenes.

Resins derived from rosin and derivatives may be used in the present invention. Gum and wood rosin have much the same composition, although the amount of the various isomers may vary. They typically contain about 10 percent by weight neutral materials, 53 percent by weight resin acids containing two double bonds, 13 percent by weight of resin acids containing one double bond, 16 percent by weight of completely saturated resin acids and 2 percent of dehydroabietic acid which contains an aromatic ring but no unsaturation. There are also present about 6 percent of oxidized acids. Representative of the diunsaturated acids include abietic acid, levopimaric acid and neoabietic acid. Representative of the monounsaturated acids include dextroplmaris acid and dihydroabietic acid. A representative saturated rosin acid is tetrahydroabietic acid. Such resins may be in the form of esters of rosin acids and polyols such as pentaerythritol or glycol.

In one embodiment, said resin may be partially or fully hydrogenated.

The rubber composition includes a combination of the optional processing oil and a hydrocarbon resin in an amount up to 65 phr. In one embodiment, the total amount of oil, if any, and hydrocarbon resin is equal to or less than 70 phr.

The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials

The vulcanizable rubber composition may include from 120 to 160 phr of silica.

In one embodiment, the weight ratio of silica to the total of hydrocarbon resin and oil is greater than 2. In one embodiment, the weight ratio of silica to the total of hydrocarbon resin and oil is greater than 2.2.

The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of from 40 to 600, and more usually in a range of from 50 to 300 square meters per gram. The BET method of measuring surface area is described in the Journal of the American Chemical Society, Volume 60, Page 304 (1930).

The conventional silica may also be typically characterized by having a dibutylphthalate (DBP) absorption value in a range of 100 to 400, and more usually 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243 and 315; silicas available from Rhodia, with, for example, designations of Z1165MP and Z165GR; and silicas available from Degussa AG with, for example, designations VN2 and VN3.

The vulcanizable rubber composition may include from 5 to 50 phr of carbon black.

Commonly employed carbon blacks can be used as a conventional filler. Representative examples of such carbon blacks include N110, N121, N134, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), particulate polymer gels such as those disclosed in US-B-6,242,534; US-B-6,207,757; US-B-6,133,364; US-B-6,372,857; US-A-5,395,891; or US-B-6,127,488, and plasticized starch composite filler such as that disclosed in US-A-5,672,639.

It may be preferred to have the rubber composition for use in the tire component to additionally contain a conventional sulfur containing organosilicon compound. Examples of suitable sulfur containing organosilicon compounds are of the formula:

Z-Alk-Sₙ-Alk-Z VIII

in which Z is selected from the group consisting of 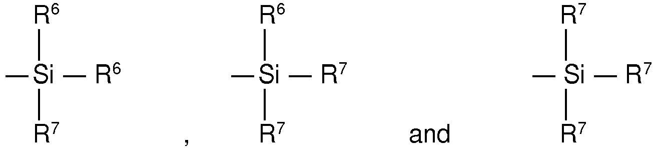 where R⁶ is an alkyl group of from 1 to 4 carbon atoms, cyclohexyl or phenyl; R⁷ is alkoxy of from 1 to 8 carbon atoms, or cycloalkoxy of from 5 to 8 carbon atoms; Alk is a divalent hydrocarbon of from 1 to 18 carbon atoms and n is an integer of from 2 to 8.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore, as to formula VIII, preferably Z is 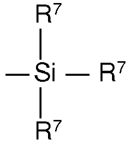 where R⁷ is an alkoxy of from 2 to 4 carbon atoms, with 2 carbon atoms being particularly preferred; alk is a divalent hydrocarbon of from 2 to 4 carbon atoms with 3 carbon atoms being particularly preferred; and n is an integer of from 2 to 5 with 2 and 4 being particularly preferred.

In another embodiment, suitable sulfur containing organosilicon compounds include compounds disclosed in US-B-6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT™ from Momentive Performance Materials.

In another embodiment, suitable sulfur containing organosilicon compounds include compounds disclosed in US-A-2006/0041063. In one embodiment, the sulfur containing organosilicon compounds include the reaction product of hydrocarbon based diol (e.g., 2-methyl-1,3-propanediol) with S-[3-(triethoxysilyl)propyl] thiooctanoate. In one embodiment, the sulfur containing organosilicon compound is NXT-Z™ from Momentive Performance Materials.

In another embodiment, suitable sulfur containing organosilicon compounds include those disclosed in US-A-2003/0130535. In one embodiment, the sulfur containing organosilicon compound is Si-363 from Degussa.

The amount of the sulfur containing organosilicon compound of formula I in a rubber composition will vary depending on the level of other additives that are used. Generally speaking, the amount of the compound of formula I will range from 0.5 to 20 phr. Preferably, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr, with a range of from 1 to 6 phr being preferred. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 through 346. Typical amounts of antiozonants comprise 1 to 5 phr. Typical amounts of fatty acids, if used, which can include stearic acid comprise 0.5 to 5 phr. Typical amounts of zinc oxide comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, preferably 0.8 to 2.0, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a tread of a tire, preferably in a tread cap layer of a pneumatic tire having a tread cap/tread base construction.

The pneumatic tire of the present invention may be a race tire, passenger tire, aircraft tire, agricultural, earthmover, off-the-road, or truck tire. Preferably, the tire is a passenger or truck tire. The tire may also be a radial or bias, with a radial being preferred.

Vulcanization of the pneumatic tire of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The following examples are presented for the purposes of illustrating the present invention. All parts are parts by weight unless specifically identified otherwise.

### Example

This example illustrates the advantage of a rubber composition according to the invention. Rubber compounds were mixed according to the formulations shown in Table 1, with amounts given in phr. The compounds were cured and tested for physical properties as shown in Table 2.

The data of Table 2 provides evidence on the use of a low Tg resin in place of a combination of high Tg resin and process oil. The control samples C1 and C2 consist of a plasticizer system comprising a mineral process oil of TDAE type and a high Tg (i.e. Tg > 20°C) hydrocarbon resins of either styrene/alphamethylstyrene or coumarone indene types.

The inventive sample E1 is formed by replacing 36 phr of a high Tg resin and 7 phr of process oil by 43 phr of a low Tg resin. Sample E1 shows significantly reduced low temperature stiffness (G' at -20°C) indicative of improved winter traction, significantly increased high temperature rebound resilience (Rebound at 100°C) indicative of reduced rolling resistance and significantly reduced abrasion loss indicative of improved treadwear. However, low temperature hysteresis (TanD at -10°C) indicative of wet grip is inevitably reduced.

The inventive sample E2 attempts to recover the predictive wet grip of Sample E1 by replacing 43 phr of low Tg resin and 10 phr of process oil by 53 phr of low Tg resin. The inventive sample E3 is further modifying sample E2 by replacing 53 phr of low Tg resin and 8 phr of process oil by 61 phr of low Tg resin.

Unexpectedly, sample E3 demonstrates a comparable low temperature hysteresis to control sample C1 while simultaneously providing lower low temperature stiffness, higher high temperature rebound resilience and lower abrasion loss. In that way, the known trade-off between predictive winter traction and wet traction are overcome along with improvements in predictive rolling resistance and treadwear making the invention useful as tire tread compound.

**Table 1**

| Composition | | C1 | C2 | E1 | E2 | E3 |
|---|---|---|---|---|---|---|
| s-SBR ¹ | 75 | 75 | 75 | 75 | 75 | 75 |
| cis-BR ² | 25 | 25 | 25 | 25 | 25 | 25 |
| Traction resin ³ | | 36 | | | | |
| Traction resin ⁴ | | | 34 | | | |
| Traction resin ⁵ | | | | 43 | 53 | 61 |
| TDAE oil | | 26 | 28 | 19 | 9 | 1 |
| Aox/Aoz | | 5 | 5 | 5 | 5 | 5 |
| Stearic acid | | 5 | 5 | 5 | 5 | 5 |
| Silane ⁶ | | 8.8 | 8.8 | 8.8 | 8.8 | 8.8 |
| Silica ⁷ | | 140 | 140 | 140 | 140 | 140 |
| ZnO | | 2.5 | 2.5 | 2.5 | 2.5 | 2.5 |
| Sulfur | 1.2 | 1.2 | 1.2 | 1.2 | 1.2 | 1.2 |
| Accelerator | | 5.7 | 5.7 | 5.7 | 5.7 | 5.7 |

| | | | | | | |
|---|---|---|---|---|---|---|
| ¹ Solution polymerized SBR with styrene content of 15% and 1,2-vinyl content of 30%, Tg = -60 °C obtained from Styron as SLR3402. ² High cis polybutadiene, obtained as Budene 1229 from The Goodyear Tire & Rubber Company. ³ Copolymer of styrene and alpha-methylstyrene, Tg =+39°C, obtained as Sylvatraxx4401 from Arizona Chemicals ⁴ Coumarone-indene resin, Tg = +55°C, obtained as Novares C100 from Rütgers ⁵ Coumarone-indene resin, Tg = -10°C, obtained as Novares C30 from Rütgers ⁶ TESPD type silane coupling agent ⁷ Hi-Sil 315G-D precipitated silica from PPG with a CTAB surface area of 125 m²/g | | | | | | |

**Table 2**

| Property | Unit | C1 | C2 | E1 | E2 | E3 |
|---|---|---|---|---|---|---|
| Tensile Properties¹ | | | | | | |
| Shore A | | 63 | 62 | 59 | 60 | 62 |
| Modulus 100% strain | MPa | 1.6 | 1.6 | 1.5 | 1.5 | 1.7 |
| Modulus 300% strain | MPa | 8.1 | 8.2 | 8.2 | 7.7 | 8.9 |
| Tensile strength | MPa | 12.8 | 14.0 | 13.0 | 13.3 | 13.3 |
| Elongation at break | % | 440 | 460 | 440 | 470 | 430 |
| RPA instrument² | | | | | | |
| G' (1%. 100°C) | MPa | 2.4 | 1.9 | 2.0 | 1.9 | 2.1 |
| Metravib instrument³ | | | | | | |
| TanD at -10°C | | 0.57 | 0.51 | 0.54 | 0.56 | 0.58 |
| G' at -20°C | MPa | 19.2 | 19.4 | 11.9 | 12.7 | 14.9 |
| Rebound⁴ | | | | | | |
| Rebound at 100°C | % | 57.4 | 56.3 | 59.5 | 59.6 | 59.2 |
| Wear Properties⁵ | | | | | | |
| DIN abrasion loss | mm³ | 102 | 87 | 85 | 71 | 67 |

| | | | | | | |
|---|---|---|---|---|---|---|
| ¹ Data according to Automated Testing System instrument by the Instron Corporation. Such instrument may determine ultimate tensile, ultimate elongation, modulii, etc. Data reported in the Table is generated by running the ring tensile test station which is an Instron 4201 load frame. ² Measured at 2% strain, frequency 0.33/3.33 Hz, 100 °C. Data according to Rubber Process Analyzer as RPA 2000 instrument by Alpha Technologies, formerly the Flexsys Company and formerly the Monsanto Company. References to an RPA-2000 instrument may be found in the following publications: H. A. Palowski, et al, Rubber World, June 1992 and January 1997, as well as Rubber & Plastics News, April 26 and May 10, 1993. ³ The G' modulus and tanD at low temperatures can be readily be determined by a Metravib TM instrument at 1.5 percent strain and 7.8 Hertz. The test method is understood to be similar to ISO 4664 and DIN 53513. ⁴ Rebound is a measure of hysteresis of the compound when subject to loading, as measured by ASTM D1054. Generally, the lower the measured rebound at 100 °C, the lower the rolling resistance. ⁵ Data according to DIN 53516 abrasion resistance test procedure using a Zwick drum abrasion unit, model 6102 with 2.5 Newtons force. DIN standards are German test standards. The DIN abrasion results are reported as relative values to a control rubber composition used by the laboratory. | | | | | | |

## Claims

1. A rubber composition for use in a tread of a pneumatic tire, wherein the rubber composition comprises, based on 100 parts by weight of elastomer (phr),
(A) from 40 to 90 phr of a functionalized or non-functionalized solution polymerized styrene-butadiene rubber having a glass transition temperature (Tg) as determined as a peak midpoint by a differential scanning calorimeter (DSC) at a temperature rate of increase of 10ºC per minute according to ASTM D7426 in a range of from -65°C to -55°C;
(B) from 60 to 10 phr of polybutadiene having a cis 1,4 content greater than 95 percent and a Tg as determined as a peak midpoint by a differential scanning calorimeter (DSC) at a temperature rate of increase of 10ºC per minute according to ASTM D7426 in a range of from -80°C to -110°C; and
(C) from 45 to 65 phr of a hydrocarbon resin having a Tg as determined by DSC according to ASTM D6604 in a range of from -40°C to 20°C;
(D) less than 10 phr of oil; and
(E) from 120 to 160 phr of silica;
wherein the total amount of resin and oil is less than 70 phr, and wherein the weight ratio of silica to resin is greater than 2.

2. The rubber composition of claim 1, wherein the solution polymerized styrene-butadiene rubber is functionalized with an alkoxysilane group and at least one functional group selected from the group consisting of primary amines and thiols.

3. The rubber composition of claim 1 or 2, wherein the weight ratio of silica to resin is greater than 2.2.

4. The rubber composition of at least one of the previous claims, wherein the hydrocarbon resin is a coumarone-indene resin.

5. The rubber composition of claim 1 or 4, wherein the hydrocarbon resin or the coumarone-indene resin has a Tg in a range of from -30°C to 10°C.

6. The rubber composition of claim 1 or 4, wherein the hydrocarbon resin or the coumarone-indene resin has a softening point temperature in a range of from 0°C to 60°C.

7. The rubber composition of at least one of the previous claims, wherein the resin is derived from styrene and alphamethylstyrene.

8. The rubber composition of at least one of the previous claims, wherein the oil is selected from the group consisting of aromatic, paraffinic, naphthenic, MES, TDAE, heavy naphthenic oils, and vegetable oils.

9. The rubber composition of at least one of the previous claims, wherein the coumarone-indene resin comprises residues of coumarone, indene, and at least one residues selected from the group consisting of methyl coumarone, styrene, α-methylstyrene, methylindene, vinyltoluene, dicyclopentadiene, cycopentadiene, and diolefins such as isoprene and piperlyene.

10. The rubber composition of at least one of the previous claims, wherein the solution polymerized styrene-butadiene rubber functionalized with an alkoxysilane group and a primary amine group, and is represented by the formula (1) or (2) 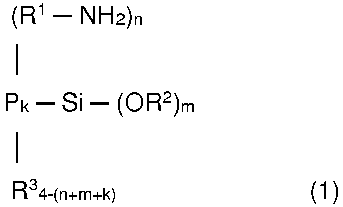 wherein P is a (co)polymer chain of a conjugated diolefin or a conjugated diolefin and an aromatic vinyl compound, R¹ is an alkylene group having 1 to 12 carbon atoms, R² and R³ are each independently an alkyl group having 1 to 20 carbon atoms, an allyl group or an aryl group, n is an integer of 1 or 2, m is an integer of 1 or 2, and k is an integer of 1 or 2, with the proviso that n+m+k is an integer of 3 or 4; 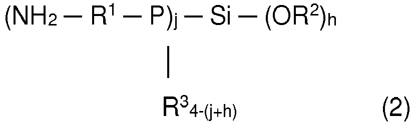 wherein P, R¹, R² and R³ have the same definitions as given for the above-mentioned formula (1), j is an integer of 1 to 3, and h is an integer of 1 to 3, with the provision that j+h is an integer of 2, 3 or 4.

11. The rubber composition of at least one of the previous claims, wherein the solution polymerized styrene-butadiene rubber is functionalized with an alkoxysilane group and a primary amine group comprises the reaction product of a living polymer chain and a terminating agent of the formula
RN-(CH₂)_{X}-Si-(OR')₃, I
wherein R in combination with the nitrogen (N) atom is a protected amine group which upon appropriate post-treatment yields a primary amine, R' represents a group having 1 to 18 carbon atoms selected from an alkyl, a cycloalkyl, an allyl, or an aryl; and X is an integer from 1 to 20.

12. The rubber composition of at least one of the previous claims, wherein the solution polymerized styrene-butadiene rubber is functionalized with an alkoxysilane group and a thiol, and comprises the reaction product of a living anionic polymer and a silane-sulfide modifier represented by the formula
(R⁴O)ₓR⁴_{y}Si-R⁵-S-SiR⁴₃
wherein Si is silicon; S is sulfur; O is oxygen; x is an integer selected from 1, 2 and 3;y is an integer selected from 0, 1, and 2; x+y=3;R⁴ is the same or different and is (C₁-C₁₆) alkyl; and R' is aryl, and alkyl aryl, or (C₁-C₁₆) alkyl.

13. A pneumatic tire having a tread comprising a rubber composition, wherein the rubber composition is the rubber composition of at least one of the previous claims.

## Patentansprüche

1. Kautschukzusammensetzung zur Anwendung in einer Lauffläche eines Luftreifens, wobei die Kautschukzusammensetzung, auf Basis von 100 Gewichtsteilen Elastomer (phr), umfasst:
(A) 40 bis 90 phr eines funktionalisierten oder nicht funktionalisierten lösungspolymerisierten Styrol-Butadien-Kautschuks, der eine Glasübergangstemperatur (Tg), ermittelt als Spitzen-Mittelpunkt durch einen Differentialscanningkalorimeter (DSC) bei einer Temperaturanstiegsrate von 10°C pro Minute gemäß ASTM D7426, im Bereich von -65°C bis -55°C aufweist;
(B) 60 bis 10 phr Polybutadien, das einen cis-1,4-Gehalt von mehr als 95 Prozent und eine Tg, ermittelt als Spitzen-Mittelpunkt durch einen Differentialscanningkalorimeter (DSC) bei einer Temperaturanstiegsrate von 10°C pro Minute gemäß ASTM D7426, im Bereich von -80°C bis -110°C aufweist; und
(C) 45 bis 65 phr eines Kohlenwasserstoffharzes, das eine Tg, ermittelt durch DSC gemäß ASTM D6604, im Bereich von -40°C bis 20°C aufweist;
(D) weniger als 10 phr Öl; und
(E) 120 bis 160 phr Silika;
wobei die Gesamtmenge an Harz und Öl weniger als 70 phr beträgt, und wobei das Gewichtsverhältnis von Silika zu Harz größer als 2 ist.

2. Kautschukzusammensetzung nach Anspruch 1, wobei der lösungspolymerisierte Styrol-Butadien-Kautschuk mit einer Alkoxysilangruppe und mindestens einer Funktionsgruppe, ausgewählt aus der aus primären Aminen und Thiolen bestehenden Gruppe, funktionalisiert ist.

3. Kautschukzusammensetzung nach Anspruch 1 oder 2, wobei das Gewichtsverhältnis von Silika zu Harz größer als 2,2 ist.

4. Kautschukzusammensetzung nach mindestens einem der vorhergehenden Ansprüche, wobei das Kohlenwasserstoffharz ein Cumaron-Inden-Harz ist.

5. Kautschukzusammensetzung nach Anspruch 1 oder 4, wobei das Kohlenwasserstoffharz oder das Cumaron-Inden-Harz eine Tg im Bereich von -30°C bis 10°C aufweist.

6. Kautschukzusammensetzung nach Anspruch 1 oder 4, wobei das Kohlenwasserstoffharz oder das Cumaron-Inden-Harz eine Erweichungspunkt-Temperatur im Bereich von 0°C bis 60°C aufweist.

7. Kautschukzusammensetzung nach mindestens einem der vorhergehenden Ansprüche, wobei das Harz von Styrol und Alphamethylstyrol abgeleitet ist.

8. Kautschukzusammensetzung nach mindestens einem der vorhergehenden Ansprüche, wobei das Öl aus der Gruppe ausgewählt ist, bestehend aus aromatischen, paraffinischen, naphthenischen, MES, TDAE, schweren naphthenischen Ölen und Pflanzenölen.

9. Kautschukzusammensetzung nach mindestens einem der vorhergehenden Ansprüche, wobei das Cumaron-Inden-Harz Reste von Cumaron, Inden und mindestens einen Rest, ausgewählt aus der Gruppe bestehend aus Methylcumaron, Styrol, a-Methylstyrol, Methylinden, Vinyltoluol, Dicyclopentadien, Cyclopentadien und Diolefinen, wie etwa Isopren und Piperylen, umfasst.

10. Kautschukzusammensetzung nach mindestens einem der vorhergehenden Ansprüche, wobei der lösungspolymerisierte Styrol-Butadien-Kautschuk mit einer Alkoxysilangruppe und einer primären Amingruppe funktionalisiert ist und dargestellt wird durch die Formel (1) oder (2) 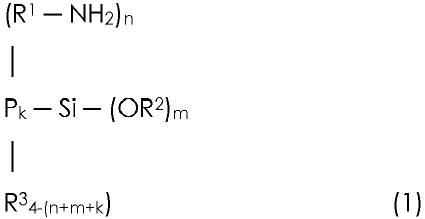 wobei P eine (Co-)Polymerkette eines konjugierten Diolefins oder eines konjugierten Diolefins und einer aromatischen Vinylverbindung ist, R¹ eine Alkylengruppe mit 1 bis 12 Kohlenstoffatomen ist, R² und R³ jedes unabhängig eine Alkylgruppe mit 1 bis 20 Kohlenstoffatomen, eine Allylgruppe oder eine Arylgruppe sind, n eine ganze Zahl von 1 oder 2 ist, m eine ganze Zahl von 1 oder 2 ist, und k eine ganze Zahl von 1 oder 2 ist, mit der Maßgabe, dass n+m+k eine ganze Zahl von 3 oder 4 ist; 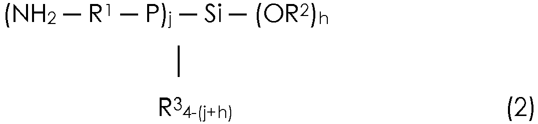 wobei P, R¹, R² und R³ dieselben Definitionen aufweisen wie für die vorgenannte Formel (1) angegeben, j eine ganze Zahl von 1 bis 3 ist und h eine ganze Zahl von 1 bis 3 ist, mit der Maßgabe, dass j+h eine ganze Zahl von 2, 3 oder 4 ist.

11. Kautschukzusammensetzung nach mindestens einem der vorhergehenden Ansprüche, wobei der lösungspolymerisierte Styrol-Butadien-Kautschuk mit einer Alkoxysilangruppe und einer primären Amingruppe funktionalisiert ist und das Reaktionsprodukt einer lebenden Polymerkette und eines Abbruchmittels der Formel
RN-(CH₂)_{X}-Si-(OR')₃ I
umfasst, wobei R in Kombination mit dem (N)-Atom eine geschützte Amingruppe ist, die bei geeigneter Nachbehandlung ein primäres Amin ergibt, R' eine Gruppe darstellt, die 1 bis 18 Kohlenstoffatome aufweist, ausgewählt aus einem Alkyl, einem Cycloalkyl, einem Allyl oder einem Aryl; und X eine ganze Zahl von 1 bis 20 ist.

12. Kautschukzusammensetzung nach mindestens einem der vorhergehenden Ansprüche, wobei der lösungspolymerisierte Styrol-Butadien-Kautschuk mit einer Alkoxysilangruppe und einem Thiol funktionalisiert ist und das Reaktionsprodukt umfasst eines lebenden anionischen Polymers und eines Silan-Sulfid-Modifikationsmittels, dargestellt durch die Formel
(R⁴O)ₓR⁴_{y}Si-R⁵-S-SiR⁴₃,
wobei Si Silizium ist; S Schwefel ist; O Sauerstoff ist; x eine aus 1, 2 und 3 ausgewählte ganze Zahl ist; y eine aus 0, 1 und 2 ausgewählte ganze Zahl ist; x+y=3; R⁴ das gleiche oder verschieden ist und (C₁-C₁₆)-Alkyl ist; und R' Aryl, und Alkylaryl, oder (C₁-C₁₆)-Alkyl ist.

13. Luftreifen mit einer Lauffläche, umfassend eine Kautschukzusammensetzung, wobei die Kautschukzusammensetzung die Kautschukzusammensetzung nach mindestens einem der vorhergehenden Ansprüche ist.

## Revendications

1. Composition de caoutchouc pour son utilisation dans une bande de roulement d'un bandage pneumatique, dans laquelle la composition de caoutchouc comprend, en se basant sur 100 parties en poids d'élastomère (phr) :
(A) de 40 à 90 phr d'un caoutchouc de styrène-butadiène polymérisé en solution, fonctionnalisé ou non fonctionnalisé, possédant une température de transition vitreuse (Tg), telle qu'on la détermine sous la forme d'un point médian maximal en utilisant un calorimètre à compensation de puissance (DSC), à une vitesse d'élévation de la température de 10 °C par minute, conformément à la norme ASTM D7426, dans la plage de -65 °C à -55 °C ;
(B) de 60 à 10 phr de polybutadiène possédant une teneur en 1,4-cis supérieure à 95 % et une valeur Tg, telle qu'on la détermine sous la forme d'un point médian maximal en utilisant un calorimètre à compensation de puissance (DSC), à une vitesse d'élévation de la température de 10 °C par minute, conformément à la norme ASTM D7426, dans la plage de -80 °C à -110 °C ; et
(C) de 45 à 65 phr d'une résine d'hydrocarbure possédant une valeur Tg, telle qu'on la détermine via une DSC, conformément à la norme ASTM D6604, dans la plage de -40 °C à 20 °C ;
(D) moins de 10 phr d'une huile ; et
(E) de 120 à 160 phr de silice ;
dans laquelle la quantité totale de la résine et de l'huile est inférieure à 70 phr ; et dans laquelle le rapport pondéral de la silice à la résine est supérieur à 2.

2. Composition de caoutchouc selon la revendication 1, dans laquelle le caoutchouc de styrène-butadiène polymérisé en solution est fonctionnalisé avec un groupe alcoxysilane et au moins un groupe fonctionnel choisi parmi le groupe constitué par des amines primaires et des thiols.

3. Composition de caoutchouc selon la revendication 1 ou 2, dans laquelle le rapport pondéral de la silice à la résine est supérieur à 2,2.

4. Composition de caoutchouc selon au moins une des revendications précédentes, dans laquelle la résine d'hydrocarbure est une résine de coumarone-indène.

5. Composition de caoutchouc selon la revendication 1 ou 4, dans laquelle la résine d'hydrocarbure ou la résine de coumarone-indène possède une valeur Tg dans la plage de -30 °C à 10 °C.

6. Composition de caoutchouc selon la revendication 1 ou 4, dans laquelle la résine d'hydrocarbure ou la résine de coumarone-indène possède une température de point de ramollissement dans la plage de 0 °C à 60 °C.

7. Composition de caoutchouc selon au moins une des revendications précédentes, dans laquelle la résine dérive du styrène et de l'alphaméthylstyrène.

8. Composition de caoutchouc selon au moins une des revendications précédentes, dans laquelle l'huile est choisie parmi le groupe constitué par des huiles aromatiques, des huiles paraffiniques, des huiles naphténiques, des huiles de type MES, des huiles de type TDAE, des huiles naphténiques lourdes et des huiles végétales.

9. Composition de caoutchouc selon au moins une des revendications précédentes, dans laquelle la résine de coumarone-interne comprend des résidus de coumarone, d'indène et au moins un résidu choisi parmi le groupe constitué par la méthylcoumarone, le styrène, l'alphaméthylstyrène, le méthylindène, le vinyltoluène, le dicyclopentadiène, le cyclopentadiène et des dioléfines telles que l'isoprène et le pipérylène.

10. Composition de caoutchouc selon au moins une des revendications précédentes, dans laquelle le caoutchouc de styrène-butadiène polymérisé en solution est fonctionnalisé avec un groupe alcoxysilane et avec un groupe d'amine primaire et répond à la formule (1) ou (2) 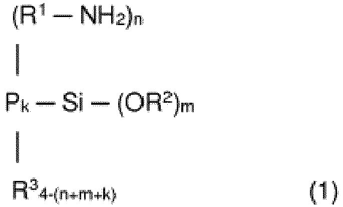 dans laquelle P représente une chaîne (co)polymère d'une dioléfine conjuguée ou d'une dioléfine conjuguée et d'un composé vinylaromatique, R¹ représente un groupe alkylène contenant de 1 à 12 atomes de carbone, R² et R³ représentent, chacun de manière indépendante, un groupe alkyle contenant de 1 à 20 atomes de carbone, un groupe allyle ou un groupe aryle, n représente un entier de 1 ou 2, m représente un entier de 1 ou 2, et k représente un entier de 1 ou 2, avec cette réserve que n+m+k représente un entier de 3 ou 4 ; 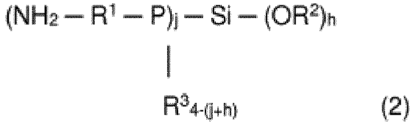 dans laquelle P, R¹, R² et R³ possèdent les mêmes définitions que celles indiquées pour la formule (1) mentionnée ci-dessus, j représente un entier de 1 à 3, et h représente un entier de 1 à 3, avec cette réserve que j+h représente un entier de 2, 3 ou 4.

11. Composition de caoutchouc selon au moins une des revendications précédentes, dans laquelle le caoutchouc de styrène-butadiène polymérisé en solution est fonctionnalisé avec un groupe alcoxysilane et avec un groupe d'amine primaire et comprend le produit réactionnel d'une chaîne polymère vivante et d'un agent de terminaison répondant à la formule :
RN-(CH₂)_{X}-Si-(OR')₃, I
dans laquelle R, en combinaison avec l'atome d'azote (N), représente un groupe d'amine protégé qui, après un traitement ultérieur approprié, fournit une amine primaire, R' représente un groupe possédant de 1 à 18 atomes de carbone choisi parmi un groupe alkyle, un groupe cycloalkyle, un groupe allyle ou un groupe aryle, et X représente un entier de 1 à 20.

12. Composition de caoutchouc selon au moins une des revendications précédentes, dans laquelle le caoutchouc de styrène-butadiène polymérisé en solution est fonctionnalisé avec un groupe alcoxysilane et avec un thiol, et comprend le produit réactionnel d'un polymère anionique vivant et d'un modificateur de silane à base de sulfure répondant à la formule :
(R⁴O)ₓR⁴_{y}Si-R⁵-S-SiR⁴₃
dans laquelle Si représente un atome de silicium ; S représente un atome de soufre ; O représente un atome d'oxygène ; x représente un entier choisi parmi 1, 2 et 3 ; y représente un entier choisi parmi 0, 1 et 2 ; x+y = 3 ; R⁴ représente un radical identique ou différent et représente un groupe alkyle en C₁-C₁₆ ; et R' représente un groupe aryle et un groupe alkylaryle ou un groupe alkyle en C₁-C₁₆.

13. Bandage pneumatique possédant une bande de roulement comprenant une composition de caoutchouc, dans lequel la composition de caoutchouc représente la composition de caoutchouc selon au moins une des revendications précédentes.
